Europäisches Patentamt

European Patent Office

Office européen des brevets

(11) Publication number: **0 397 331**
**A2**

## EUROPEAN PATENT APPLICATION

(21) Application number: 90304069.9

(22) Date of filing: 17.04.90

(51) Int. Cl.⁵: **B32B 31/28, B32B 27/12**

(30) Priority: 08.05.89 US 349372

(43) Date of publication of application:
14.11.90 Bulletin 90/46

(84) Designated Contracting States:
AT BE CH DE DK ES FR GB GR IT LI LU NL SE

(71) Applicant: **MILLIKEN RESEARCH CORPORATION**
Post Office Box 1927 920 Milliken Road
Spartanburg South Carolina 29304(US)

(72) Inventor: **Demott, Roy Phillip**
307 Holly Drive
Spartanburg, South Carolina 29301(US)

(74) Representative: **Pacitti, Pierpaolo Alfonso M.E. et al**
Ian G. Murgitroyd and Company Mitchell
House 333 Bath Street
Glasgow G2 4ER(GB)

(54) Laminated fabric suitable for use in automotive interior applications.

(57) A textile laminate is provided suitable for use in interior automotive parts applications, which comprises a surface layer of a textile fabric weighing from about 6 ounces per square yard to about 24 ounces per square yard made at least predominately from nylon fibers or polyester fibers and a layer of a polyester-polyurethane film having a thickness of from about .2 mil to about 20 mils; said fabric having been dielectrically bonded to said textile fabric.

FIG. -1-

EP 0 397 331 A2

## LAMINATED FABRIC SUITABLE FOR USE IN AUTOMOTIVE INTERIOR APPLICATIONS

A liminate is provided which is suitable for use in automotive interior applications. More particularly, a laminated fabric is provided which is especially useful for the manufacture of decorative, upholstered panels and seats which may be formed by heat bonding using dielectric bonding techniques.

In a typical automotive interior construction, such as a door panel, a backcoated, woven or knitted fabric is bonded to a nonwoven plumper fabric or wadding and the other surface of the wadding is bonded to a rigid polymer-coated fiberboard or paperboard sidewall door paneling. Both bonding operations are accomplished by means of a rapid, one step dielectric bonding operation.

The dielectric bonding technique involves the use of a high frequency electromagnetic field to cause rapid and uniform heating of a relatively nonconductive material to bond two or more layers of the material together. If the electromagnetic force applied (measured in volts) is too intense, arcing may occur which will cause the fabric to char, making it unusable. Most manufacturers currently require the composite to withstand the application of at least 3,000 volts without arcing in order to achieve a properly and permanently bonded composite.

Unfortunately, certain fabrics, typically those made entirely or predominately from nylon (both spun and filament) tend to become charred by this arcing phenomenon at less than the 3,000 volt level required by manufacturers to produce an acceptable upholstered panel. Nylon fabrics backcoated with conventional backcoating compositions, such as acrylic latex polymers which are widely used on fabrics used for automotive interior trim applications, tend to be even more susceptible to this undesirable arcing phenomenon. The presence of flame retardants in the backcoating, which frequently are required to satisfy United States government-mandated flammability standards, may result in even greater arcing propensity.

With regard to fabrics made predominantly from polyester fibers, such fabrics are relatively "non-polar" as compared to nylon and are, hence, quite nonconductive. Therefore, they may tend to bond poorly to many substrates resulting in a tendency to delaminate which is unacceptable in automotive and many other applications.

The laminates of the present invention, accordingly may exhibit enhanced resistance to the arcing voltages required for dielectric bonding procedures typically employed in the manufacture of decorative, upholstered products for automobiles such as door panels and seats. Furthermore, a laminate is provided which may be formed by dielectric bonding techniques and which resists delamination and which is, accordingly, quite desirable for automotive interior applications.

Furthermore, the laminates of the present invention satisfy the flammability requirements for interior automotive parts which have been imposed by the United States Department of Transportation as well as other requirements which have been imposed by the automobile manufactures themselves.

The laminates also exhibit quite desirable aesthetic properties such as hand characteristics and stretchability, the latter of which in particular, assists the molding and forming of interior parts such as seats, door panels, arm rests and other parts.

The laminates, lastly, are relatively non-porous to air, as contrasted to conventionally backcoated fabrics, and, therefore, they may advantageously be processed into automotive parts by means of vacuum forming operations which are commonly employed in the manufacture of automotive interior parts.

According to the present invention, a laminate is provided which is suitable for use in the manufacture of interior automotive parts, which comprises a surface layer of a textile fabric weighing from about 6 ounces per square yard to about 24 ounces per square yard said fabric being comprised of fibers made at least predominately (that is containing at least 80 percent) from a synthetic thermoplastic polymer selected from nylon or polyester; and a layer of polyester-polyurethane film having a thickness of from about 0.5 mil to about 20 mils said film having been heat bonded to said textile fabric.

According to another embodiment, the invention relates to a method for dielectric bonding which comprises heat bonding a textile fabric weighing from about 6 to about 24 ounces per square yard to a polyester-polyurethane film having a film thickness of from about .2 mil to about 20 mils to form a laminate; bring said laminate into contact with a plumper fabric which plumper fabric is in turn in contact with a backing board; and thereafter dielectrically bonding said laminate, plumper fabric and backing board together to form an automotive part at a voltage of at least about 3,000 volts for at least about 10 seconds.

As mentioned above the fabrics of the present invention include a wide variety of fabrics made predominately from nylon fibers or polyester fibers. Such fabrics may include wovens such as flat wovens, napped wovens, woven stretch velours, woven stretch fabrics containing some Lycra; knits such as Raschel knits, and napped Raschel knits; double needle bar fabrics; weft insertion fabrics; and double knits. Even non-woven fabrics may be envisioned for use in connection with the present invention, especially fabrics currently employed as automotive interior face fabrics, e.g. non-woven needle punch fabrics, which currently find desirable applications as door panel fabrics and as automotive carpeting. The fabrics, broadly speaking, may weigh from about 6 to about 24 ounces per square yard, preferably from about 10 to about 20 ounces per square yard.

While fabrics, typically used to manufacture automotive interior parts generally have desirable stretch characteristics, conventional backcoating compositions tend to severely restrict stretch and make the composite rather stiff or rigid. Such composites are more difficult to conform to a shaped substrate and are generally less aesthetically pleasing. The films employed to manufacture the laminates of the present invention result in products having quite desirable stretch characteristics, e.g., from about 1 percent to about 40 percent depending upon the stretch of the fabric employed, and they are therefore easier to process into a final product and are more aesthetically pleasing than conventionally back-coated laminates.

The film material employed in connection with the present invention is a polyester-polyurethane film. Such films have been found to be particularly desirable because of flammability characteristics imparted to the laminate, general overall toughness of the film, and excellent flex characteristics even in cold weather which is essential for automobile interiors that are frequently subjected to low temperatures. The film material employed, furthermore, results in laminates having excellent drape and soft hand. All of these characteristics are, of course, desirable in laminates used to make automotive interior parts. Significantly, however, the laminates of the present invention, because of their improved stretch, hand and drape characteristics may be employed to manufacture rather more complex parts for automotive and other applications than have heretofore been available.

Furthermore, the laminates of the present invention are relatively impervious to air as contrasted to conventionally back-coated fabrics. Therefore, as is the case with door panels where the back of the molded product may be exposed, even indirectly, to the outside environment, airbound dust and other dirt particles are prevented from passing through the laminate to cause soiling of the face fabric.

With regard to the film, it has been found that polyester-polyurethanes must be used because, for instance, other films which might be otherwise desirable such as polyether-polyurethane and polyethylene do not satisfy the flammability requirements demanded in automotive applications. The polyester-polyurethanes, furthermore, may be employed without the necessity of adding flame retardants either to the film or the fabric or both which is not desired from the standpoint of cost, and also because such materials tend to retard adhesion and are frequently undesirable from an environmental standpoint. Additional flame retardants may, of course, be used if desired.

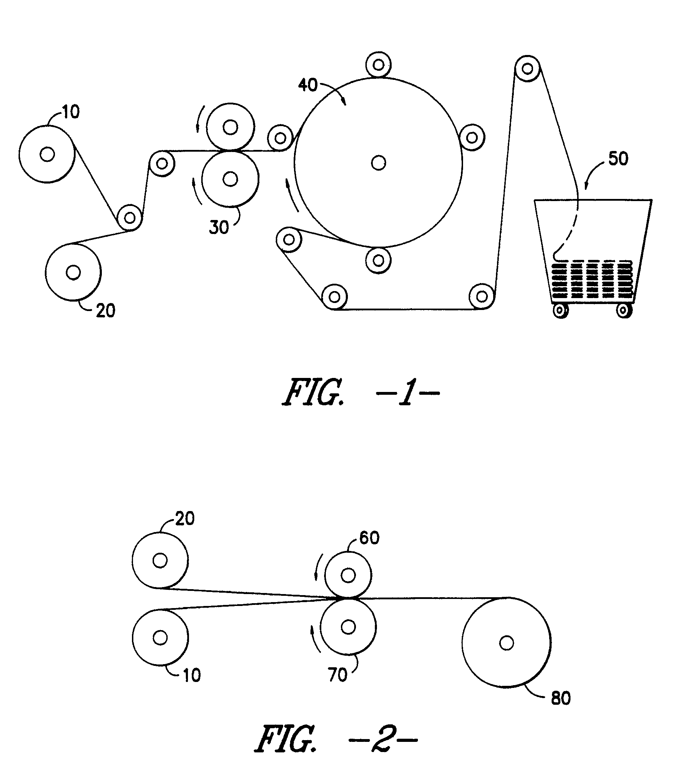

Referring now to the drawings and in particular to Figure 1, the laminates of the present invention may conveniently be manufactured by means of a conventional steam rolling and laminating machine which continuously brings a selected fabric 10 into intimate contact with film 20. The film is heated in contact with the fabric by means of, for instance, a steam-heated rotating cylinder 30 to a temperature of at least about 250° F, preferably 275° F depending upon the particular film selected. The fabric 10 is maintained with slight pressure in contact with film 20 for a predetermined period of time, say from about 5 seconds to about two minutes or even longer as it rotates around a second, larger steam roll 40 heated to from about 275° F to 350° F. Thereupon the fabric is allowed to cool while undisturbed. While passive cooling, that is simple exposure to ambient air, may be employed and is in fact preferred, application of positive cooling means such as a cooled roll (not shown) may be used. At this point the laminate may be stored for future use as in storage bin 50 or it may be further processed immediately by, for instance, cutting it into desired shapes for the particular application desired.

Referring now to Figure 2, fabric 10 is simply brought into contact with film 20 between oil filled roll 60 heated to from about 350° F to about 400° F and water cooled roll 70. The fabric is allowed to cool by contact with ambient atmosphere and is stored on pickup roll 80.

The invention may be further understood by reference to the following examples which are not to be construed as limiting the invention as defined in the claims appended hereto.

General Procedure

Preparation of Textile Laminates

A suitable textile fabric is brought into intimate contact between a rubber roll and steam can heated to a temperature of from about 225 to 275° F with a polyester-polyurethane film having a film thickness of about 1.5 mils. The film is thus tacked or adhered to the fabric. Then the composite proceeds to a large steam heated cylinder heated to a temperature of from about 275 to 320° F. On the cylinder the composite is provided with sufficient dwell time, from about one to about three minutes, to fully adhere and bond the film to the fabric.

Another method for better adhesion is to bring a suitable textile fabric into intimate contact with a polyester polyurethane film between a heated hot oil roll to a temperature from about 350 to about 425° F and a cold roll (water) cooled to 5 seconds to 1 minute to sufficiently bond the laminate to prevent the removal of the film during wear and/or during testing. It is also observed that the yarns, tufts, and fibers are adhered to one another to minimize or prevent removal during wear and testing.

## Dielectric Bonding of a Laminate to a Substrate

Dielectric bonding or heating is the process by which a high frequency high energy electrical field is used to induce heat in an electrical insulating material. The electrical field generates heat directly in the materials and, therefore, does not force external heat into the materials or pass an electrical current through them.

For this dielectric bonding procedure a 14 Megahertz Test Press was employed of the type used for testing the dielectric bonding performance of laminates proposed for use in the automotive industry. This test press was developed by the Fisher Textile lab and is very similar to actual production equipment but is smaller all owing for easier installation and widespread use.

In general, automotive door panel constructions are made using dielectric heat sealing which makes use of the dielectric strength of the material which can be generally defined as its ability to withstand an increase in voltage without arcing. Nylon fibers are more polar than polyester or polypropylene fibers and hence heat up more rapidly in a dielectric field with a greater susceptibility to premature arcing. Also, nylon has far greater moisture pick-up and retained moisture can lead to rapid heating and early arcing. Arcing occurs when a current applied, during dielectric heat sealing, finds a path of lesser resistance than that between the electrodes of a heat sealer. As a consequence, voltage is concentrated near the seal line and particularly the sharp edges of the die. Fabrics, plumper, or backing or all three are burned or discolored.

We evaluate arc resistance following a Fisher Body specified procedure, GM9144P.

## The Arc Test

A conditioned sample is placed on top of a previously dried backer board (one hour at 85° C) followed by an arc test plate obtained from Fisher Body. This sandwich construction is placed in a dielectric press at a die force of 2000 pounds in a total heating cycle of ten seconds.

Arc resistance is determined by subjecting a conditioned uncoated fabric sample to a particular voltage to just cause arcing. Then backcoated samples or fabric film laminates are subjected to the identical voltage settings. If no arcing occurs, voltage setting are increased until arc failure is obtained. The sample is sealed in a dielectric press and monitored by sizzling sounds, sudden increases or decreases in the press meter at 2900 to 3000 volts, arcing, and burnthrough. Fisher Body specifies that the laminate samples have a pass voltage in the arc resistance test of at least 3000 volts.

## The Bond Test

Another test for dielectric sealing determines the bond strength during heating. After conditioning, a composite sandwich, where the laminate of fabric and film is assembled with the upholstered fabric (wear surface side against the die), is layered with the padding, followed by a backing panel which has previously been prepared with a vinyl coating and foam riser pads. This sandwich is dielectrically sealed under voltage conditions to provide between 150 to 163° C (specifically 156° C) for ten seconds heating cycle and an additional hold time of ten seconds at a die force of 2000 pounds.

Strength of the bond between the fabric and standard padding is measured using the bond test.

After the textile laminate has been dielectrically sealed, the sealed composite is placed in an oven heated to about 85° C for four hours after which lifting of the fabric from the board is checked by observation or peel strength. This strength stimulates the ability of the stressed bond to withstand the heat experienced when the car may be subsequently repainted and for when it has been left in the sun on a hot day for an extended period of time.

The combination of the arc test and bond test are used to approved materials for dielectric bonding operations typically employed in the automotive industry.

EXAMPLES 1-3

In examples 1-3 summarized in Table I below, a series of fabric constructions were subjected to the dielectric arcing-bonding test. As can be seen by reference to Table I, the unbackcoated constructions, Example 1, failed at 2700 volts. The conventionally backcoated, Example 2, also failed at 2700 volts while the same fabric construction laminated to the polyester polyurethane film to form a laminate passed at 3300 volts and did not, in fact, fail until 3500 volts were applied.

TABLE I

| Fabric | Arc Test | | Bond Test |
|---|---|---|---|
| | Pass | Fail | |
| 1. 75% Polyester 25% Nylon Flatwoven (Unbackcoated) | 2600 volts | 2700 volts | Satisfactory |
| 2. 75% Polyester 25% Nylon Flatwoven (Flame Retardant-Acrylic Backcoating) | 2500 volts | 2700 volts | Satisfactory |
| 3. 75% Polyester 25% Nylon Flatwoven (Polyester Polyurethane Film) | 3300 volts | 3500 volts | Satisfactory |

Federal Motor Vehicle Safety Standard Test 302

Fabrics that are used for the interior of automobiles in the United States including door panel fabrics, headliners and upholstery fabrics must all pass the Federal Motor Vehicle Safety Standard Test 302 (hereinafter Test 302). This is a horizontal test in which a flame such as flame from a bunsen burner is placed in contact with the fabric (face down) for 15 seconds. The fabric is then removed from the flame. Timing begins when the leading flame front from the burning fabric specimen reaches the first scribed line placed 1 1/2 inches from the open end of the fabric specimen. The time that it takes the flame to progress to the second scribed line placed 1 1/2 inches from the clamped end of the fabric specimen is then measured. If the fabric extinguishes itself before reaching the second scribed line, its progress to the point where flaming stops is timed and the distance burned is measured.

The following definitions are used to report the flammability results summarized in Table II:

A. Does not ignite (D.N.I.) - The material does not support combustion following the 15 second ignition (no calculation required).

B. Self-extinguishing (S.E.) - Material ignites on either surface, but the flame extinguishes itself before reaching the first scribed line (no calculation required).

C. Self-extinguishing/no burn rate (S.E./N.B.R.) - The material stops burning before it has burned for 60 seconds from the start of timing, and has not burned more than 2 inches from the point where timing was started (no calculation required).

D. Burn Rate (B.R.) - When the leading flame front on either surface progresses beyond the first scribed line, its progress is timed and measured to the furthest point where burning stops or 10 inches from the first scribed line. If the burn distance exceeds 2 inches or the burn time is 60 seconds or greater the result is calculated and reported as summarized below:

$$B = 60 \times \frac{D}{T}$$

where

B = burn rate time in inches per minute.

D = length the flame travels in inches and

T = time in seconds for the flame to travel D inches

## EXAMPLES 4-7

In Examples 4-7 summarized below a 100% polyester stretch woven velour fabric is formed into a laminate using the general procedure set forth above and is bonded in Examples 4 and 5 to a polyester polyurethane film (purchased from Deerfield Urethanes, Inc.) having film thicknesses of 2 and 4 mils respectively. In Examples 6 and 7 polyether-polyurethane films were used (also from Deerfield having film thicknesses of 1.5 and 3 mils respectively). These laminates were then tested pursuant to Federal Motor Vehicle Safety Standard Test 302 and the results for both warp and fill are summarized in Table II. As can be seen from Table II the polyester polyurethanes had no burn rates whereas the polyether-polyurethanes both burned.

TABLE II

| Federal Motor Vehicle Safety Standard 302 | | | | |
|---|---|---|---|---|
| | | | Flammability Results Inches/Minute | |
| Fabric | Film | Film Thickness | Warp | Fill |
| 4. 100% Polyester Stretch Woven Velour | Polyester/Polyurethane | 2 mils | SE/NBR | SE/NBR |
| 5. 100% Polyester Stretch Woven Velour | Polyester/Polyurethane | 4 mils | SE/NBR | SE |
| 6. 100% Polyester Stretch Woven Velour | Polyether/Polyurethane | 1.5 mils | 3.06 | 1.77 |
| 7. 100% Polyester Stretch Woven Velour | Polyether/Polyurethane | 3 mils | 3.11 | 1.86 |

## EXAMPLES 8-11

In Examples 8-11 in Table III below a polyester nylon flatwoven fabric is formed into a laminate using the general procedure set forth above and is bonded in Examples 8 and 9 to a polyester polyurethane film (purchased from Deerfield Urethanes, Inc.) having film thicknesses of 2 and 4 mils respectively. In Examples 10 and 11 polyether-polyurethane films were used (also from Deerfield) having film thicknesses of 1.5 and 3 mils respectively. These laminates were then tested pursuant to the Federal Motor Vehicle Safety Standard Test 302 and the results for both warp and fill are summarized in Table III. As can be seen from Table III, the polyester polyurethane had no burn rates whereas the polyether-polyurethanes both burned.

TABLE III

| Federal Motor Vehicle Safety Standard 302 | | | | |
|---|---|---|---|---|
| | | | Flammability Results Inches/Minute | |
| Fabric | Film | Film Thickness | Warp | Fill |
| 8. 75% Polyester/25% Nylon Flatwoven | Polyester/Polyurethane | 2 mils | SE | SE |
| 9. 75% Polyester/25% Nylon Flatwoven | Polyester/Polyurethane | 4 mils | SE | SE/NBR |
| 10. 75% Polyester/25% Nylon Flatwoven | Polyether/Polyurethane | 1.5 mils | 2.99 | 4.36 |
| 11. 75% Polyester/25% Nylon Flatwoven | Polyether/Polyurethane | 3 mils | 1.57 | 4.65 |

EXAMPLES 12-14

The laminates also exhibit quite desirable aesthetic properties such as hand characteristics and stretchability, the latter of which in particular, assits the molding and forming of interior parts such as seats, door panels, arm rests and other parts.

Using the general procedure for textile laminates set forth above a series of three laminates were prepared using a polyester polyurethane film. Since the film has an elongation of over 300 percent, the fabric is totally unrestricted whereas fabric coated with an acrylic backcoating with flame retardant is totally restricted.

TABLE IV

| Fabric Stretch | | | |
|---|---|---|---|
| Fabric | Fiber Content | Polyester Polyurethanes Laminate | Flame Retardant Backcoating Compound |
| 12. Flatwoven | 75% Polyester 25% Nylon | 3 | 0 |
| 13. Flatwoven | 100% Polyester | 20 | 2 |
| 14. Stretch Velour | 100% Polyester | 10 | 0 |

EXAMPLES 15-16

The laminates are relatively non-porous to air as contrasted to conventionally backcoated fabrics and may be processed into automotive parts by means of vacuum forming operations. Also as in the case with door panels the back of the product may be exposed to the outside environment. Dust and other dirt particles are prevented from passing through the laminate to cause soiling of the face fabric. In Table V the air porosity of the film laminate is measured vs. an unbackcoated fabric.

TABLE V

| | | Air Permeability | |
|---|---|---|---|
| Fabric | Fiber Content | Film Laminate | (Cubic feed/minute/square foot) Unbackcoated Fabric |
| 15. Flatwoven | 75% Polyester 25% Nylon | 13.07 | 129.0 |
| 16. Flatwoven | 100% Polyester | 0.10 | 50.9 |

**Claims**

1. A textile laminate suitable for use in interior automotive part applications, which comprises a surface layer of a textile fabric weighing from about 6 ounces per square yard to about 24 ounces per square yard made at least predominately from fibers selected from nylon and polyester, and a layer of polyester-polyurethane film having a thickness of from about .5 mil to about 20 mils, said film having been heat laminated to said textile fabric.

2. The textile laminate of claim 1 wherein said textile laminate has stretch characteristics of from about 1 percent to about 40 percent.

3. A method for dielectric bonding which comprises heat bonding a textile fabric weighing from about 6 ounces per square yard to about 24 ounces per square yard to a polyester-polyurethane film having a film thickness of from about .2 mil to about 20 mils to form a laminate; bringing said laminate into contact with a plumper fabric which in turn is in contact with a backing board; and thereafter dielectrically bonding said laminate, plumper fabric and backing board together to form an automotive part at a voltage of at least about 3,000 volts for at least about 10 seconds.

FIG. -1-

FIG. -2-